# EUROPÄISCHE PATENTSCHRIFT

(11) **EP 3 243 011 B1**
(45) Veröffentlichungstag und Bekanntmachung des Hinweises auf die Patenterteilung: **27.10.2021**
(21) Anmeldenummer: 15825941.6
(22) Anmeldetag: 30.12.2015
(51) Int. Cl.: F16F 7/10, H02K 5/24

(54) **INTEGRIERTE DOPPELT ELASTISCHE AKTIVTEILABKOPPLUNG**
INTEGRATED DOUBLE ELASTIC ACTIVE PART DISCONNECTION
DÉSACCOUPLEMENT ACTIF ÉLASTIQUE DOUBLE INTÉGRÉ

(30) Priorität: 17.02.2015 EP 15155369
(43) Veröffentlichungstag der Anmeldung: 15.11.2017
(73) Patentinhaber: Siemens Energy Global GmbH & Co. KG, 81739 München (DE)
(72) Erfinder: TEFERT, Peter, 14052 Berlin (DE); BALZER, Christoph, 12163 Berlin (DE); JUNGIEWICZ, Artur, 13086 Berlin (DE); KRABINSKI, Jeffrey, 12169 Berlin (DE); VOGELEY, Peter, 14612 Falkensee (DE)
(86) Internationale Anmeldenummer: PCT/EP2015/081444
(87) Internationale Veröffentlichungsnummer: WO 2016/131518

(56) Entgegenhaltungen:
- DE-A1- 4 239 504
- DE-A1- 10 150 031
- DE-A1- 10 306 228
- DE-A1- 19 604 556

## Beschreibung

Die Erfindung betrifft eine elektrische rotierende Maschine aufweisend einen Aktivteil, ein erstes flexibles Element, ein zweites flexibles Element und eine Zwischenmasse.

Eine derartige elektrische rotierende Maschine, beispielsweise ein Motor oder ein Generator, insbesondere mit einer Leistung von mehr als einem Megawatt, weist einen Aktivteil auf, der aus den Komponenten besteht, die bei einem Motor maßgeblich für die Konversion von elektrischer Energie in mechanische Energie vorgesehen sind und bei einem Generator für die Konversion von mechanischer Energie in elektrischer Energie vorgesehen sind. Durch den Betrieb der elektrischen rotierenden Maschine entstehen unerwünschte Schwingungsgeräusche, welche in Abhängigkeit ihrer Drehzahl einen relativ großen Frequenzbereich überdecken können und eine Umweltbelastung darstellen.

Eine doppeltelastische Schwingungsabkopplung, auch Schwingungsisolierung genannt, ist eine in der Industrie bekannte und angewandte Lösung zur Reduktion der durch Schwingungsgeräusche hervorgerufenen Umweltbelastung. Das Hauptprinzip basiert auf der Platzierung der Störungsquelle, insbesondere der Maschine, auf einer Konstruktion aus flexiblen Elementen, beispielsweise Federelementen, und einer Zwischenmasse zur Reduzierung der übertragenen mechanischen Schwingungen. Sowohl die Steifigkeiten der flexiblen Elemente als auch das Gewicht der Zwischenmasse sind Designparameter. Die Anbindung der Störungsquelle, welche als Aktivteil bezeichnet wird, an das Fundament erfolgt dabei über zwei Schichten von flexiblen Elementen zwischen die die bereits erwähnte Zwischenmasse geschaltet wird.

Aus DE 39 14 250 A1 ist ein Lagerelement zur elastischen Unterstützung von Schwingungen erzeugenden Maschinen, insbesondere von Motoren in Kraftfahrzeugen, mit Federelementen bekannt.

Aus EP 0 580 272 B1 ist ein Schwingungsdämpfer für ein System zur Schwingungsisolierung von Objekten mit großer Masse, wie Maschinen, Baugruppen oder Gebäuden, bekannt.

Die Offenlegungsschrift DE 196 04 556 A1 beschreibt ein Gerät zur Wärmeerzeugung in Gebäuden, bestehend aus einem Aggregat mit einem treibenden Teil und einem angetriebenen Teil, wobei der treibende Teil ein Elektromotor, ein Gasmotor oder einen Dieselmotor sein kann, und wobei der getriebene Teil ein Generator, ein Kompressor oder eine Wärmepumpe sein kann, aus einer Konsole für das Aggregat, die mit mindestens einem ersten Federelement gegen einen Tragrahmen schwingungsisoliert ist, aus mehreren Rohranschlüssen, aus einer elektrischen Zuleitung und aus einem Außengehäuse, bestehend aus einer Grundplatte und allseitig luftschallisolierenden Seitenwänden, wobei der Tragrahmen als freischwingende Masse zwischen der Konsole und dem Außengehäuse über mindestens ein zweites Federelement zwischen dem Tragrahmen und dem Außengehäuse angeordnet ist.

Der Erfindung liegt die Aufgabe zugrunde, eine elektrische rotierende Maschine mit Mitteln zur Schwingungsisolierung eines Aktivteils anzugeben, bei der der Platzbedarf für die Installation der Maschine signifikant verringert ist.

Die Aufgabe wird erfindungsgemäß durch eine elektrische rotierende Maschine aufweisend einen Aktivteil, ein erstes flexibles Element, ein zweites flexibles Element und eine Zwischenmasse gelöst, wobei der Aktivteil über ein erstes flexibles Element mit der Zwischenmasse mechanisch verbunden ist, wobei die Zwischenmasse dafür vorgesehen ist, über das zweite flexible Element mit einem Fundament mechanisch verbunden zu werden, wobei die Zwischenmasse als ein Gehäuse für den Aktivteil ausgeführt ist und wobei das erste flexible Element, die als Gehäuse ausgeführte Zwischenmasse und das zweite flexible Element zur Schwingungsisolierung zwischen dem Aktivteil und dem Fundament vorgesehen sind, wobei das erste flexible Element und/oder das zweite flexible Element mindestens ein Federelement aufweisen, wobei parallel zu mindestens einem der Federelemente mindestens eines flexiblen Elements ein viskoser Schwingungsdämpfer geschaltet ist.

Der Erfindung liegt die Erkenntnis zu Grunde, dass bisherige Lösungen der Platzbedarf für die Installation der Maschine um die zusätzliche Zwischenmasse und die flexiblen Elemente erheblich steigen kann, was bei vielen Anlagen mit hohen Schwingungsanforderungen zur Lösung von damit verbundenen Problemen führen kann.

Demgegenüber bestehen die Vorteile der Erfindung insbesondere darin, dass der Platzbedarf für die Schwingungsisolierung durch die Ausführung der Zwischenmasse als Gehäuse für den Aktivteil, welcher die Störungsquelle darstellt, erheblich reduziert wird.

Das erste flexible Element und/oder das zweite flexible Element weisen mindestens ein Federelement auf. Dieses Federelement besteht bevorzugt aus einem speziellen Federstahl. Da bei Federelementen eine genaue Bestimmung der Federwerte möglich ist, kann die Vorrichtung zur Schwingungsisolierung mit einem vertretbaren Aufwand definiert abgestimmt werden.

Parallel zu mindestens einem der Federelemente mindestens eines flexiblen Elements ist ein viskoser Schwingungsdämpfer geschaltet. Da der gegebene Aufbau einen Einmassenschwinger mit einer bestimmten Eigenfrequenz des Aktivteils darstellt, wobei Schwingungen oberhalb der Eigenfrequenz des Aktivteils isoliert werden, kommt es bei der Anregung mit der Eigenfrequenz des Aktivteils zu einer resonanzartigen Überhöhung der Kraftübertragungsfunktion. Um die Maschine bei dieser Frequenz zu begrenzen werden parallel zu den elastischen Federelementen viskose Schwingungsdämpfer geschaltet.

Bei einer weiteren vorteilhaften Ausgestaltung sind sowohl die als Gehäuse ausgeführte Zwischenmasse als auch das erste flexible Element mit dem Aktivteil zu einem Antrieb integriert. Durch diese kompakte Realisierung wird Platz eingespart und/oder die Qualität der Schwingungsisolierung durch die Möglichkeit der Verwendung von mehr Material zur Schwingungsabkopplung verbessert.

In einer bevorzugten Ausführungsform ist die als Gehäuse ausgeführte Zwischenmasse zur mechanischen Verbindung mit einem zweiten flexiblen Element insbesondere an das Fundament vorgesehen. Durch diese doppeltelastische Schwingungsabkopplung wird eine Übertragung von Erschütterungen oder Schwingungen in die Umgebung, auch Umwelt genannt, und/oder eine Übertragung von Erschütterungen oder Schwingungen auf einen zu isolierende Gegenstand verhindert.

In besonders vorteilhafter Weise sind der Aktivteil und das erste flexible Element in das Gehäuse integriert. Dies ist besonders vorteilhaft, da durch das unter Umständen erforderliche Gehäuse der Platzbedarf für die Schwingungsisolierung reduziert wird.

In besonders vorteilhafter Weise ist das Gehäuse zur Schwingungsisolierung, zum Schutz des Aktivteils und zum Tragen des Aktivteils vorgesehen. Dies ist besonders vorteilhaft, da so mehrere Aufgaben vom Gehäuse erfüllt werden, was sowohl Bauraum als auch Kosten einspart.

In einer weiteren vorteilhaften Ausgestaltung ist der Zwischenraum zwischen dem Aktivteil und dem Gehäuse mit einem gasförmigen Medium gefüllt. Dies ist beispielsweise bei Motoren Luft, kann aber auch ein anderes Gas oder Gasgemisch sein.

Im Folgenden wird die Erfindung anhand der in den Figuren dargestellten Ausführungsbeispiele näher beschrieben und erläutert.

Es zeigen:
FIG 1 eine schematische Darstellung einer Vorrichtung zur Schwingungsisolierung eines Aktivteils und
FIG 2 eine schematische Darstellung einer Vorrichtung zur Schwingungsisolierung eines Aktivteils, wobei Zwischenmasse und flexible Elemente in einem Antrieb integriert sind.

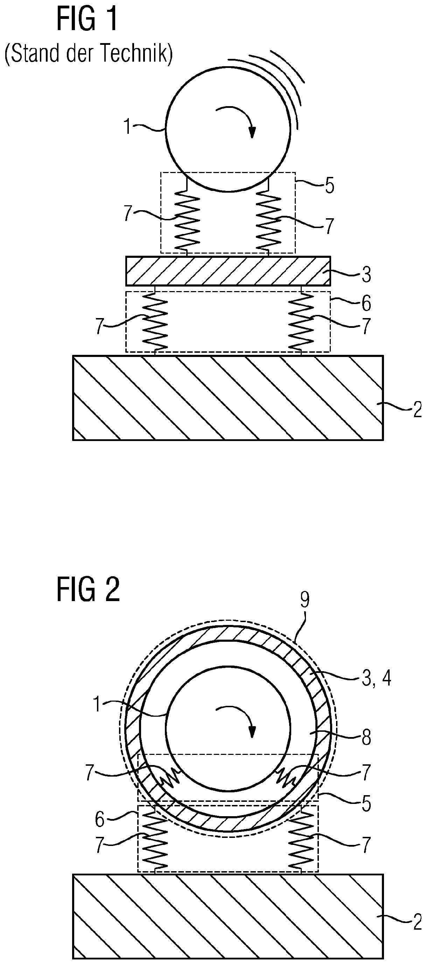

FIG 1 zeigt eine schematische Darstellung einer Vorrichtung zur Schwingungsisolierung eines Aktivteils 1 mit einer doppeltelastischen Schwingungsabkopplung. Bei schwingungserzeugenden Maschinen, Systemen oder Aggregaten dient die Schwingungsisolierung dazu, eine Übertragung einer Erschütterung in die Umgebung zu verhindern. Weiterhin kann es auch notwendig werden, eine Übertragung von Erschütterungen oder Schwingungen auf einen zu isolierenden Gegenstand zu verhindern. Zu diesem Zweck wird der Aktivteil 1 über elastische Zwischenglieder, insbesondere flexible Elemente 5, 6, von einem Fundament 2, auf dem der Aktivteil 1 ruht, abgekoppelt. Eine sogenannte doppeltelastische Schwingungsabkopplung, auch Schwingungsisolierung genannt, ist hierbei eine in der Industrie bekannte und angewandte Lösung zur Reduktion der Umweltbelastung, die durch rotierende oder reziproke Maschinen verursacht wird. Das Hauptprinzip basiert auf der Platzierung eines Aktivteils 1, welcher eine Störungsquelle darstellt, auf einer Konstruktion aus flexiblen Elementen 5, 6, beispielsweise Federelementen 7, und einer Zwischenmasse 3 zur Reduzierung der übertragenen mechanischen Schwingungen. Sowohl die Steifigkeiten der flexiblen Elemente 5, 6 als auch das Gewicht der Zwischenmasse 3 sind Designparameter und beispielsweise von der Masse des Aktivteils 1 und von der Frequenz der Schwingung beziehungsweise den Frequenzen der Schwingungen abhängig. Die Anbindung des Aktivteils 1, an das Fundament 2 erfolgt dabei über zwei Schichten von flexiblen Elementen 5, 6, nämlich dem ersten flexiblen Element 5, welches den Aktivteil 1 mit der Zwischenmasse 3 verbindet, und dem zweiten flexiblen Element 6, welches die Zwischenmasse 3 auf dem Fundament 2 fixiert. Demnach ist die Zwischenmasse 3 zwischen die oben beschriebenen flexiblen Elemente 5, 6 geschaltet.

FIG 2 zeigt eine schematische Darstellung einer Vorrichtung zur Schwingungsisolierung eines Aktivteils 1, wobei Zwischenmasse 3 und flexible Elemente 5, 6 in einem Antrieb 9 integriert sind. Hierbei ist die Zwischenmasse 3 als Gehäuse 4 für den Aktivteil 1 derartig ausgeführt, dass der Aktivteil 1 und das erste flexible Element 5 in das Gehäuse 4 integriert sind, was im Vergleich zur in FIG 1 beschriebenen Lösung den Vorteil hat, dass der Platzbedarf der Maschine erheblich reduziert wird.

Hierbei weisen das erste flexible Element 5 und/oder das zweite flexible Element 6 mindestens ein Federelement 7 auf. In der dargestellten Ausführungsform sind exemplarisch jeweils zwei Federelemente 7 dargestellt. Diese Federelemente 7 bestehen bevorzugt aus einem speziellen Federstahl. Da bei Federelementen 7 eine genaue Bestimmung der Federwerte möglich ist, kann die Vorrichtung zur Schwingungsisolierung mit einem vertretbaren Aufwand definiert abgestimmt werden.

Die Realisierung einer integrierten doppeltelastischen Aktivteilabkopplung verlangt nach einer entsprechenden Gestaltung des Aktivteiles 1 und des Gehäuses 4 des Motors oder Generators. Eine entsprechende Gestaltung und Auslegung der flexiblen Elemente 5, 6 an den Verbindungsteilen sowohl zwischen dem Aktivteil 1 und Gehäuse 4 als auch zwischen dem Gehäuse 4 und Fundament 2 ist ebenfalls notwendig. Das Hauptmerkmal der Erfindung liegt darin, dass das Gehäuse 4 des Aktivteils neben der üblichen Schutz- und Tragfunktion auch zur einen effektiven Reduktion der Schwingungsbelastung herangezogen wird.

Der Zwischenraum 8 zwischen dem Aktivteil 1 und dem Gehäuse 4 kann mit einem gasförmigen Medium, beispielsweise Luft gefüllt sein. Weiterhin kann der Zwischenraum 8 zumindest teilweise mit einem viskosen oder viskoelastischem Medium gefüllt sein. Dies ist besonders vorteilhaft, da so die Bewegungen des Aktivteils 1 sehr flexibel begrenzt werden können. Weiterhin kann parallel zu mindestens einem der Federelemente 7 mindestens eines flexiblen Elements 5, 6 ein viskoser Schwingungsdämpfer geschaltet sein. Da der gegebene Aufbau einen Einmassenschwinger mit einer bestimmten Eigenfrequenz des Aktivteils 1 darstellt, wobei Schwingungen oberhalb der Eigenfrequenz des Aktivteils 1 isoliert werden, kommt es bei der Anregung mit der Eigenfrequenz des Aktivteils 1 zu einer resonanzartigen Überhöhung der Kraftübertragungsfunktion. Viskose Schwingungsdämpfer, welche parallel zu den elastischen Federelementen 7 geschaltet sind, begrenzen die Anordnung bei dieser Frequenz zusätzlich.

Zusammenfassend betrifft die Erfindung eine elektrische rotierende Maschine 10 aufweisend einen Aktivteil 1, ein erstes flexibles Element 5, ein zweites flexibles Element 6 und eine Zwischenmasse 3. Um den Platzbedarf für die Installation der elektrischen rotierenden Maschine 10 im Vergleich zum Stand der Technik signifikant zu verringern, wird vorgeschlagen, dass der Aktivteil 1 über ein erstes flexibles Element 5 mit der Zwischenmasse 3 mechanisch verbunden ist, wobei die Zwischenmasse 3 dafür vorgesehen ist, über das zweite flexible Element 6 mit einem Fundament mechanisch verbunden zu werden, wobei die Zwischenmasse 3 als ein Gehäuse 4 für den Aktivteil ausgeführt ist und wobei das erste flexible Element 5, die als Gehäuse 4 ausgeführte Zwischenmasse 3 und das zweite flexible Element 6 zur Schwingungsisolierung zwischen dem Aktivteil 1 und dem Fundament 5 vorgesehen sind.

## Patentansprüche

1. Elektrische rotierende Maschine (10) aufweisend einen Aktivteil (1), ein erstes flexibles Element (5), ein zweites flexibles Element (6) und eine Zwischenmasse (3),
wobei der Aktivteil (1) über ein erstes flexibles Element (5) mit der Zwischenmasse (3) mechanisch verbunden ist,
wobei die Zwischenmasse (3) dafür vorgesehen ist, über das zweite flexible Element (6) mit einem Fundament mechanisch verbunden zu werden,
wobei die Zwischenmasse (3) als ein Gehäuse (4) für den Aktivteil ausgeführt und
wobei das erste flexible Element (5), die als Gehäuse (4) ausgeführte Zwischenmasse (3) und das zweite flexible Element (6) zur Schwingungsisolierung zwischen dem Aktivteil (1) und dem Fundament (5) vorgesehen sind,
wobei das erste flexible Element (5) und/oder das zweite flexible Element (6) mindestens ein Federelement (7) aufweisen,
**dadurch gekennzeichnet, dass** parallel zu mindestens einem der Federelemente (7) mindestens eines flexiblen Elements (5, 6) ein viskoser Schwingungsdämpfer geschaltet ist.

2. Elektrische rotierende Maschine (10) nach Anspruch 1, **dadurch gekennzeichnet, dass** das Gehäuse (4) zur Schwingungsisolierung, zum Schutz des Aktivteils (1) und zum Tragen des Aktivteils (1) vorgesehen ist.

3. Elektrische rotierende Maschine (10) nach einem der Ansprüche 1 oder 2,
**dadurch gekennzeichnet, dass** ein Zwischenraum (8) zwischen dem Aktivteil (1) und dem Gehäuse (4) mit einem gasförmigen Medium gefüllt ist.

## Claims

1. Rotating electrical machine (10) having an active part (1), a first flexible element (5), a second flexible element (6) and an intermediate mass (3),
wherein the active part (1) is mechanically connected to the intermediate mass (3) by means of a first flexible element (5) ,
wherein the intermediate mass (3) is intended to be mechanically connected to a base by means of the second flexible element (6),
wherein the intermediate mass (3) is embodied as a housing (4) for the active part, and
wherein the first flexible element (5), the intermediate mass (3) that is embodied as a housing (4) and the second flexible element (6) are provided for vibration isolation between the active part (1) and the base (5),
wherein the first flexible element (5) and/or the second flexible element (6) have/has at least one spring element (7), **characterized in that**
a viscous vibration damper is connected parallel to at least one of the spring elements (7) of at least one flexible element (5, 6).

2. Rotating electrical machine (10) according to Claim 1, **characterized in that** the housing (4) is provided for vibration isolation, for protecting the active part (1) and for carrying the active part (1).

3. Rotating electrical machine (10) according to either of Claims 1 or 2,
**characterized in that** an intermediate space (8) between the active part (1) and the housing (4) is filled with a gaseous medium.

## Revendications

1. Machine (10) électrique tournante, comportant une partie (1) active, un premier élément (5) souple, un deuxième élément (6) souple et une masselotte (3) intermédiaire,
dans laquelle la partie (1) active est reliée mécaniquement à la masselotte (3) intermédiaire par un premier élément (5) souple, dans laquelle la masselotte (3) intermédiaire est prévue pour être reliée mécaniquement à une fondation par le deuxième élément (6) souple,
dans laquelle la masselotte (3) intermédiaire est réalisée sous la forme d'une enveloppe (4) de la partie active et
dans laquelle le premier élément (5) souple, la masselotte (3) intermédiaire réalisée en enveloppe (4) et le deuxième élément (6) souple sont prévus pour l'isolation des vibrations entre la partie (1) active et la fondation (5),
dans laquelle le premier élément (5) souple et/ou le deuxième élément (6) souple ont au moins un élément (7) de ressort, **caractérisée en ce qu'**un amortisseur visqueux de vibration est monté en parallèle à au moins l'un des éléments (7) de ressort d'au moins un élément (5, 6) souple.

2. Machine (10) électrique tournante suivant la revendication 1, **caractérisée en ce que** l'enveloppe (4) pour l'isolation des vibrations est prévue pour protéger la partie (1) active et pour supporter la partie (1) active.

3. Machine (10) électrique tournante suivant l'une des revendications 1 ou 2,
**caractérisée en ce qu'**un espace (8) intermédiaire entre la partie (1) active et l'enveloppe (4) est empli d'un fluide gazeux.
